# EUROPEAN PATENT APPLICATION

(11) **EP 4 797 154 A1**
(43) Date of publication of application: **26.08.2026**
(21) Application number: 25225713.4
(22) Date of filing: 19.12.2025
(51) Int. Cl.: G06N 3/045, G06N 5/022, G06N 3/044, G06N 3/0464, G06N 3/0475, G06N 3/084, G06N 3/092

(54) **PREDICTING ANIMAL EMOTIONS USING ANIMAL EMOTION KNOWLEDGE GRAPH AND GRAPH NEURAL NETWORK**

(30) Priority: 19.02.2025 IN 202521014089
(71) Applicant: Tata Consultancy Services Limited, Mumbai, Maharashtra 400 021 (IN)
(72) Inventor: BALASUBRAMANIAN, Hemavathy, 600113 Chennai (IN); PATIL, Ruturaj Nivas, 422057 Pune (IN); SARANGI, Sanat, 400601 Thane (IN); SINGH, Dineshkumar Jang Bahadur, 400601 Thane (IN); MOHITE, Jayantrao, 400601 Thane (IN); PAPPULA, Srinivasu, 500081 Hyderabad (IN)
(74) Representative: Goddar, Heinz J.

(57) **Abstract**

This disclosure relates generally to a method and system for predicting animal emotions using animal emotion knowledge graph and graph neural network. Current available methods focus only on visual and language data captured from animals and lacks real time adaptability. The method disclosed generates an animal emotion knowledge graph (AEKG) that combines human and animal neurobiological data, behavioral studies, and the human wheel of emotions. Further real time graphs are generated from multimodal input data captured from the animal. These real time graphs are used for predicting primary, secondary, and tertiary emotions of the animals using a trained graph neural network-Transformer model. This model is trained using the AEKG. Using temporal graph analysis, the method predicts future emotions and generates real-time recommendations based on generative artificial intelligence techniques. Predicting the emotions of animals in real time helps to grasp their emotional well-being to improve their care and management effectively.

## Description

### CROSS-REFERENCE TO RELATED APPLICATIONS AND PRIORITY

The present application claims priority to Indian application no. 202521014089, filed on 19 February 2025.

### TECHNICAL FIELD

The disclosure herein generally relates to animal emotion prediction using machine learning, and, more particularly, to a method and system for predicting animal emotions using animal emotion knowledge graph and graph neural network.

### BACKGROUND

Animal emotion detection technology improves animal care by monitoring stress and well-being in pets, livestock, and wildlife. It enhances training, customizes pet products, and optimizes human-animal interactions, including with therapy of animals. It also aids in livestock management and supports conservation efforts. Additionally, it improves animal-robot interactions, increasing efficiency across industries.

When studying cattle emotions, it is crucial to understand how to recognize and interpret their emotional states. Unlike humans who can communicate emotions verbally, interpreting cattle emotions can be complex. The goal is to grasp their emotional well-being to improve their care and management effectively. Existing technologies for understanding and predicting animal emotions face several challenges. The existing methods lack to interpret complex or subtle emotional states beyond basic emotions like fear or happiness. Current methods frequently rely on single data sources (e.g., audio or video) leading to reduced accuracy. Additionally, there is a scarcity of annotated and generalized datasets, limiting the effectiveness of training artificial intelligence (AI) models across different species. Mapping animal behaviors to specific emotions remains challenging due to the absence of standardized models and interpretative tools. Real-time analysis and prediction are also underdeveloped, as many systems lack the computational efficiency or advanced algorithms needed for dynamic and nonlinear emotion prediction. Furthermore, ethical concerns about data interpretation and misuse, as well as the lack of actionable recommendations tailored to specific contexts or species, further limit practical applications. Existing methodologies rely on pre-trained multi-modal transformer models, trained on human emotion datasets and adapted to small animal emotion datasets through transfer learning. This static approach lacks the flexibility to incorporate new relationships or dynamically update its representations.

### SUMMARY

Embodiments of the present disclosure present technological improvements as solutions to one or more of the above-mentioned technical problems recognized by the inventors in conventional systems. For example, in one embodiment, a method for predicting animal emotions using animal emotion knowledge graph and graph neural network is provided. The method includes a set of real time graphs represented as an animal emotion knowledge graph (AEKG) from a multi-modal input data of an animal. The multi-modal input data is captured from a set of sensors at each time instant in real time comprises an audio data, a video data, a physiological data, and an environmental data. Furthermore the method includes, determining one or more emotions comprising at least one of (i) a primary emotion, or (ii) the primary emotion and a secondary emotion, or (iii) the primary emotion, the secondary emotion and a tertiary emotion, from the set of real time graphs using a trained graph neural network (GNN)- transformer model. Further the method includes, generating an emotion intensity corresponding to the one or more emotions using an emotion intensity function based on the multi-modal input data. Further the method includes, predicting a future emotion of the animal for a next time instant using a recurrent neural network by performing a temporal analysis based on the one or more emotions determined at a current time instant and one or more previous time instants. Finally the method includes, generating via a large language model a set of real-time recommendations by querying a recommendation database based on the one or more emotions determined in real time, the predicted future emotion, the emotion intensity, the environment data and time spent in the emotion determined in the current time instant from an animal emotion diary.

In another aspect, a system for predicting animal emotions using animal emotion knowledge graph and graph neural network is provided. The system comprises memory storing instructions; one or more communication interfaces; and one or more hardware processors coupled to the memory via the one or more communication interfaces, wherein the one or more hardware processors are configured by the instructions to generate a set of real time graphs represented as an animal emotion knowledge graph (AEKG) from a multi-modal input data of an animal. The multi-modal input data is captured from a set of sensors at each time instant in real time comprises an audio data, a video data, a physiological data, and an environmental data. Furthermore the system includes, determining one or more emotions comprising at least one of (i) a primary emotion, or (ii) the primary emotion and a secondary emotion, or (iii) the primary emotion, the secondary emotion and a tertiary emotion, from the set of real time graphs using a trained graph neural network (GNN)- transformer model. Further the system includes, generating an emotion intensity corresponding to the one or more emotions using an emotion intensity function based on the multi-modal input data. Further the system includes, predicting a future emotion of the animal for a next time instant using a recurrent neural network by performing a temporal analysis based on the one or more emotions determined at a current time instant and one or more previous time instants. Finally the system includes, generating via a large language model a set of real-time recommendations by querying a recommendation database based on the one or more emotions determined in real time, the predicted future emotion, the emotion intensity, the environment data and time spent in the emotion determined in the current time instant from an animal emotion diary.

The set of real time graphs are generated based on an animal wheel of emotion (AWOE) adapted from human neurobiological data, animal neurobiological data, a human wheel of emotion, and experimental data. The set of real time graphs comprises a first set of nodes representing a set of features extracted from the multi-modal input data, a first set of edges representing a first set of relationships between the first set of nodes, and a weight corresponding to each relationship indicating a transition probability of the relationship.

The trained GNN-transformer model is generated by initially building the AEKG comprising a plurality of nodes and a plurality of edges based on the human neurobiological data, the animal neurobiological data, the human wheel of emotion, and the experimental data. The plurality of edges represents a plurality of relationships between the plurality of nodes. Further a labelled set of scenario specific subgraphs are extracted comprising a second set of nodes and a second set of edges representing a second set of relationships, from the AEKG based on a set of scenario types comprising a set of species-specific emotional scenarios, a set of context-specific scenarios and a set of rare scenarios using a set of pre-defined rules. Further a GNN-transformer model is trained to obtain the trained GNN-transformer model using the labelled set of scenario specific subgraphs. A set of GNN layers in the GNN-transformer model learns the second set of relationships, a set of transformer layers in the GNN-transformer model learns a set of temporal dependencies from the labelled set of scenario specific subgraphs and a fusion layer in the GNN-transformer model combines the learnt second set of relationships and the learnt set of temporal dependencies for predicting the primary emotion, the secondary emotion and the tertiary emotion in real time.

The one or more emotions are determined using a first level detection, a second level detection and a third level detection. The primary emotion is determined in the first level of detection, from a first subset of real time graphs of the set of real time graphs generated from a first subset of features extracted from the audio data. The secondary emotion is determined in the second level of detection, at least (i) from a second subset of real time graphs of the set of real time graphs generated from a second subset of features extracted from the audio data and the video data if a confidence score from the trained GNN-transformer model is more than a pre-defined threshold, or (ii) from a third subset of real time graphs of the set of real time graphs generated from a third subset of features extracted from the audio data, the video data, the physiological data, and the environmental data. The tertiary emotion is determined in the third level of detection, from the third subset of real time graphs generated from the third subset of features.

The emotion intensity function is mathematically represented as, $Emotion intensity function = f \left(\begin{matrix}AD ∗ W 1 , PD ∗ W 2 , BD ∗ \\ W 3 , ED ∗ W 4\end{matrix}\right) ∗ 100$ where, AD is an average of normalized values of the audio characteristic data, PD is an average of normalized values of the physiological data, BD is an average of normalized values of behavior data extracted from the video data, ED is an average of normalized values of the environmental data, W1, W2, W3, W4 is at least one of a pre-defined (i) high weightage, or (ii) medium weightage, or (iii) low weightage.

In yet another aspect, there are provided one or more non-transitory machine-readable information storage media comprising one or more instructions which when executed by one or more hardware processors cause predicting animal emotions using animal emotion knowledge graph and graph neural network is provided. The instructions which when executed by the one or more hardware processors cause generating a set of real time graphs represented as an animal emotion knowledge graph (AEKG) from a multi-modal input data of an animal. The multi-modal input data is captured from a set of sensors at each time instant in real time comprises an audio data, a video data, a physiological data, and an environmental data. Furthermore the instructions which when executed by the one or more hardware processors cause determining one or more emotions comprising at least one of (i) a primary emotion, or (ii) the primary emotion and a secondary emotion, or (iii) the primary emotion, the secondary emotion and a tertiary emotion, from the set of real time graphs using a trained graph neural network (GNN)- transformer model. Further the instructions which when executed by the one or more hardware processors cause generating an emotion intensity corresponding to the one or more emotions using an emotion intensity function based on the multi-modal input data. Further the instructions which when executed by the one or more hardware processors cause predicting a future emotion of the animal for a next time instant using a recurrent neural network by performing a temporal analysis based on the one or more emotions determined at a current time instant and one or more previous time instants. Finally the instructions which when executed by the one or more hardware processors cause generating via a large language model a set of real-time recommendations by querying a recommendation database based on the one or more emotions determined in real time, the predicted future emotion, the emotion intensity, the environment data and time spent in the emotion determined in the current time instant from an animal emotion diary.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for predicting animal emotions using animal emotion knowledge graph and graph neural network according to some embodiments of the present disclosure.
FIG.2 is an exemplary flow diagram illustrating a method for predicting animal emotions using animal emotion knowledge graph and graph neural network according to some embodiments of the present disclosure.
FIG. 3 is an overall block diagram depicting the method for predicting the animal emotions using the animal emotion knowledge graph and the graph neural network according to some embodiments of the present disclosure.
FIG. 4 illustrates a sample animal wheel of emotion for cattle according to some embodiments of the present disclosure.
FIG. 5 illustrates a block diagram for primary emotion detection unit according to some embodiments of the present disclosure.
FIG. 6 illustrates a block diagram for secondary emotion detection unit according to some embodiments of the present disclosure.
FIG.7 illustrates a block diagram for tertiary emotion detection unit according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Current available methods focus primarily on visual and language data captured from animals, limiting their capability to comprehensively analyze animal emotions. It does not include physiological signals (e.g., cortisol levels) or environmental factors (e.g., predator presence), which are critical for understanding animal emotions in real-world contexts. The current methodologies lack mechanisms for real-time adaptability. They use pre-trained models that are static and do not update based on incoming data or evolving scenarios. Also, these current methods focus on classifying a limited set of emotions (e.g., happy, sad, angry) and do not categorize them into primary, secondary, and tertiary emotions or quantify their intensity.

Embodiments of the present disclosure provide a dynamic, adaptive framework for emotion detection and prediction in animals. The method disclosed generates a dynamic knowledge graph that combines human and animal neurobiological data, behavioral studies, and the human wheel of emotions. This graph captures relationships between primary, secondary, and tertiary emotional states. Further scenario-specific subgraphs are extracted for targeted training of advanced machine learning models such as hybrid graph neural network (GNN)-Transformers or Temporal Graph Neural Networks (TGNNs). The method disclosed integrates real-time multimodal data (e.g., audio, video, physiological, and environmental inputs) to detect emotions dynamically, categorize them across multiple levels, and quantify their intensity. Additionally, using temporal graph analysis, the method disclosed predicts future emotional transitions and generates real-time recommendations based on generative artificial intelligence (GenAI) techniques, enabling actionable interventions.

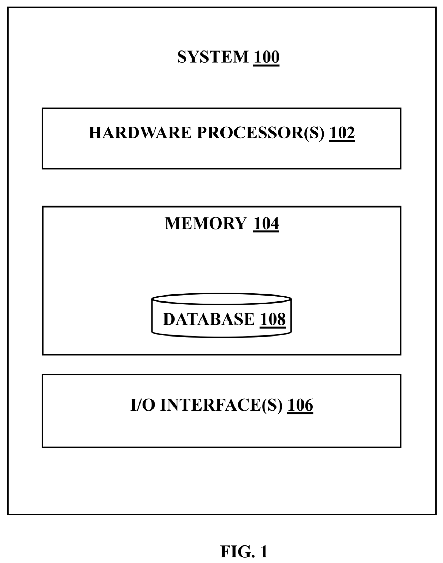

Referring now to the drawings, and more particularly to FIG. 1 through FIG. 7, where similar reference characters denote corresponding features consistently throughout the figures, there are shown preferred embodiments, and these embodiments are described in the context of the following exemplary system and/or method.

FIG. 1 illustrates an exemplary block diagram of a system for predicting animal emotions using animal emotion knowledge graph and graph neural network according to some embodiments of the present disclosure. In an embodiment, the system 100 includes one or more hardware processors 102, communication interface(s) or input/output (I/O) interface(s) 106, and one or more data storage devices or memory 104 operatively coupled to the one or more processors 102. The one or more hardware processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

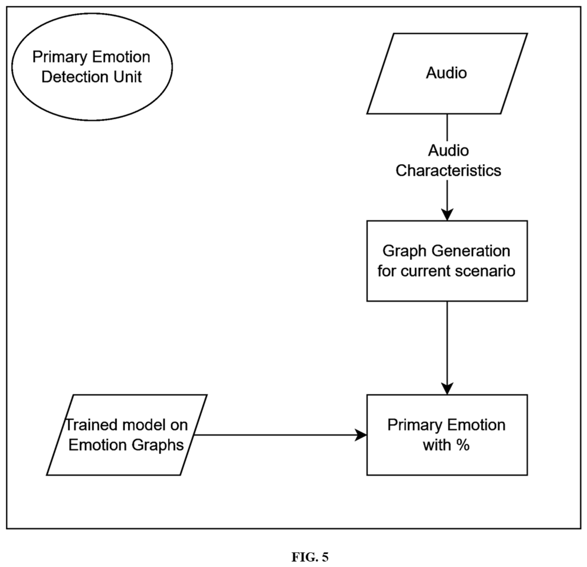

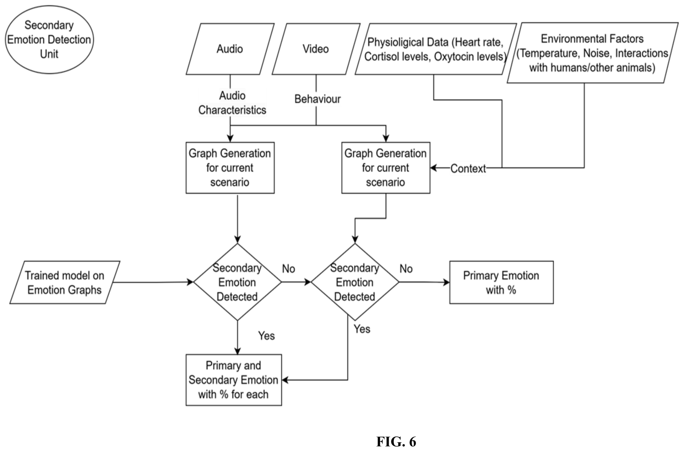

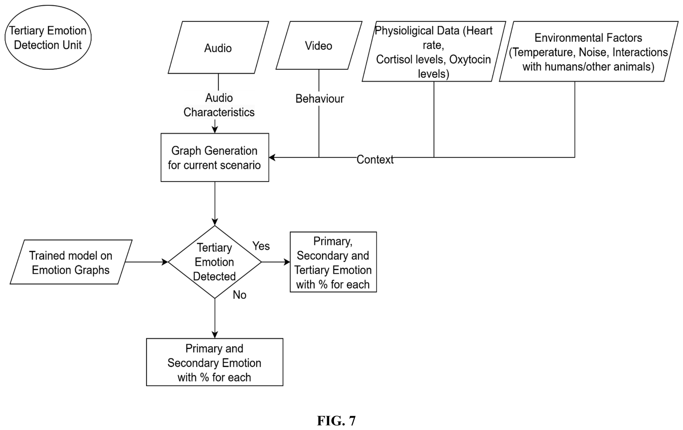

In an embodiment, the memory 104 includes a plurality of modules, such as a primary emotion detection unit (FIG. 5), a secondary emotion detection unit (FIG. 6), a tertiary emotion detection unit (FIG. 7), and the like. Further, the plurality of modules includes programs or coded instructions that supplement applications or functions performed by the system 100 for executing different steps involved in the process for predicting animal emotions by the system 100. The plurality of modules, amongst other things, can include routines, programs, objects, components, and data structures, which performs particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 102, or by a combination thereof.

Further, the memory 104 may include a database 108 or repository. The memory 104 may comprise information pertaining to input(s)/output(s) of each step performed by the processor(s) 102 of the system 100 and methods of the present disclosure. In an embodiment, the database 108 may be external (not shown) to the system 100 and coupled via the I/O interface 106. The database may include emotion database, recommendation database etc.

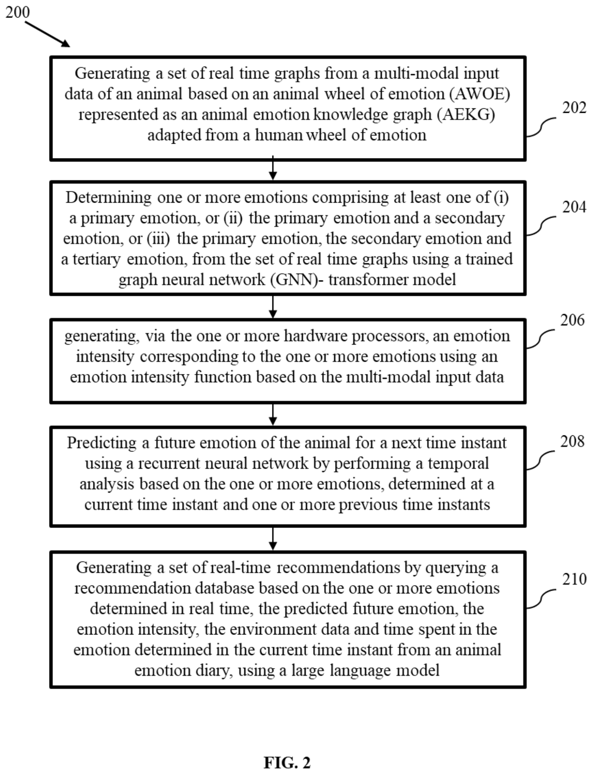

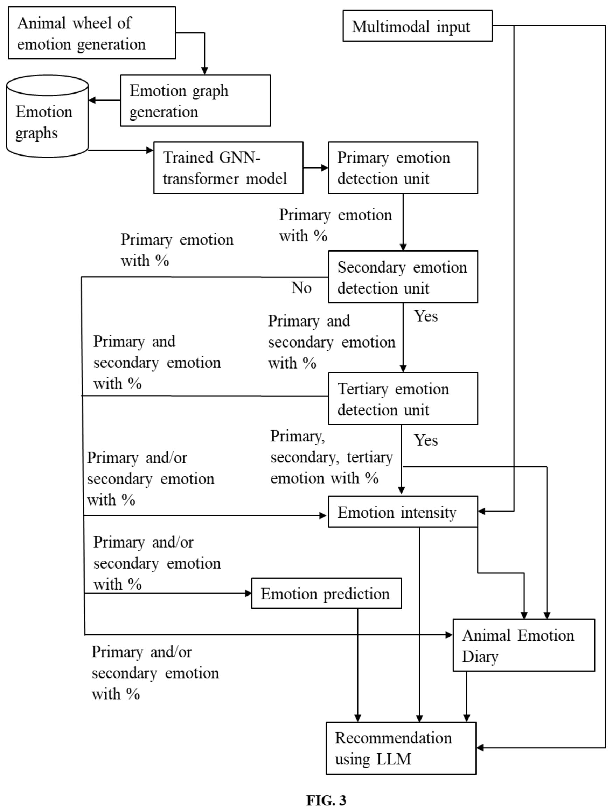

FIG.2 is an exemplary flow diagram illustrating a method for predicting animal emotions using animal emotion knowledge graph and graph neural network according to some embodiments of the present disclosure. In an embodiment, the system 100 comprises one or more data storage devices or the memory 104 operatively coupled to the one or more hardware processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1, and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented with any suitable hardware, software, firmware, or combination thereof. The overall steps explained henceforth are shown as a block diagram in FIG. 3. FIG. 3 is an overall block diagram depicting the method for predicting animal emotions using animal emotion knowledge graph and graph neural network according to some embodiments of the present disclosure.

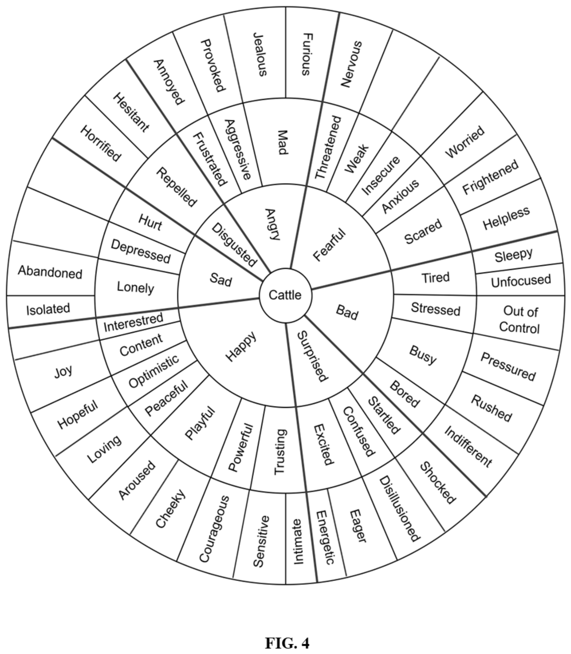

Now referring to FIG. 2A, at step 202 of the method 200, one or more hardware processors 102 are configured to generate a set of real time graphs from a multimodal input data of an animal based on an animal wheel of emotion (AWOE) represented as an animal emotion knowledge graph (AEKG) adapted from a human wheel of emotion. The set of real time graphs are generated at each time instant in real time. The multi-modal input data captured from a set of sensors at each time instant in real time comprises an audio data, a video data, a physiological data, and an environmental data. Real time multimodal input data gathered from various sources is used to create the set of real time graphs. Data Sources are vocalizations such as analyze pitch, frequency, and intensity for emotional cues, behavioral observations from the video data such as postures, movements, or social interactions which are extracted using computer vision models (e.g., OpenPose, YOLO), physiological measurements from the physiological data which include time-series cortisol, oxytocin levels, or heart rate and environmental context from the environmental data such as predator proximity, herd size, or resource availability. FIG. 4 illustrates a sample animal wheel of emotion for cattle according to some embodiments of the present disclosure.

The set of real time graphs comprises a first set of nodes and a first set of edges. The first set of nodes represent a set of features extracted from the multi-modal input data and the first set of edges represent a first set of relationships between the first set of nodes. A weight is associated with each relationship indicating a transition probability of the relationship. Nodes represent extracted features (e.g., loud vocalization, fast movement, cortisol spike). Edges represent relationships (e.g., "cortisol spike. fear vocalization"). Weights quantify relationships based on real time data. At each timestamp t, relevant multimodal data is collected and converted into real time graphs, each represented as Gₜ. This graph consists of nodes representing features such as vocalization characteristics from audio data, movement patterns from video data, physiological signals (e.g., cortisol levels) from physiological data, and environmental factors (e.g., predator proximity) from environmental data. Edges represent relationships between these nodes, with weights indicating the strength or probability of these relationships. For example, "Predator Nearby → Loud Vocalization (0.85)" reflects the likelihood of a predator triggering loud vocalizations. The graph Gₜ is processed to encode its nodes and edges into feature vectors. Node features are extracted directly from raw data, such as audio characteristics from audio data, motion vectors from video data, or cortisol levels from physiological readings or data. Edge weights are assigned based on causal or correlational information, such as historical patterns or domain knowledge, ensuring that the graph captures meaningful relationships between features.

Further at step 204 of the method 200, one or more hardware processors 102 are configured to determine one or more emotions comprising at least one of (i) a primary emotion, or (ii) the primary emotion and a secondary emotion, or (iii) the primary emotion, the secondary emotion and a tertiary emotion, from the set of real time graphs using a trained graph neural network (GNN)- transformer model. Here a GNN-transformer model or a temporal graph neural network (TGNN) is used for determining the one or more emotions. The GNN-transformer model is trained by building the AEKG comprising a plurality of nodes and a plurality of edges representing a plurality of relationships between the plurality of nodes. The AEKG is built based on human neurobiological data, animal neurobiological data, the human wheel of emotion (HWOE), and experimental data. This data are provided to a generative artificial intelligence (GenAI) model to build the AEKG. The AEKG adapts the emotional categories found in the HWOE to be relevant to animals by considering several factors as described henceforth. It is observed how animals express emotions through body language, vocalizations, facial expressions and physiological markers such as heart rate, breathing rate and so on. From these observations the behavioral indicators of animal emotions are determined. Studying neurobiological systems involved in emotion in both humans and animals such as limbic system which governs emotional processing in mammals helps in determining neurobiological similarities. Neurobiological similarities between animal species are determined using generative AI models as well. The application of AI tools like generative adversarial networks (GANs) to study vocalizations helps in understanding neural connections that relate to emotional responses. For example, analyzing how pitch and intensity in an animal's vocalization may correlate with emotions like distress or excitement helps bridge the neural underpinnings of animal emotional states. Just as the HWOE identifies primary emotions like joy, trust, fear, and anger, these core emotions can be mapped onto animal emotional expressions. For example, a deer's freeze response (fear) or a dog's tail wagging (joy) represents a behavioral and emotional mapping, like how humans express and recognize fear or happiness. By utilizing AI models like GANs, the relationships between vocalizations and emotional states in animals can be analyzed. For example, pitch might be strongly associated with distress (higher pitch) or excitement (sharp changes in pitch), while intensity and duration might indicate contentment or aggression. This mapping can evolve from the emotional data of both humans and animals, creating an AWOE similar to the HWOE. The AI model can learn to associate specific vocal features (e.g., pitch, volume, and rhythm) with certain emotional states like distress, contentment, or fear. These relationships can help generate new audio samples that reflect specific emotional tones, while maintaining the unique vocal characteristics of different animal species.

The audio, physiological and behavioral experimental data is obtained utilizing audio features, physiological features, generative AI models, environmental and scenario data. This experimental data can be obtained from any veterinary knowledge base. Machine learning models, including GANs, extract and analyze speech features (such as pitch, volume, and rhythm) from animal vocalizations. This analysis can determine which audio features most strongly indicate emotional states like excitement, distress, or aggression. Physiological markers such as heart rate, cortisol levels, and oxytocin are instrumental in gauging animal emotions. These physiological features align with emotional states, as observed in both humans and animals. The application of AI and deep learning models to study vocalizations and emotions helps for better understanding of the connections between emotional expressions and behavioral patterns. The model can generate emotional tone maps that relate specific vocalization features to animal emotional states, creating a deeper understanding of how emotions are communicated. The context in which an animal behaves (e.g., encountering a predator vs. playing with a companion) can heavily influence its emotional state. Scenario data can also help in differentiating emotional responses. For example, an animal might show excitement in one context (approaching food) but fear in another (approaching a loud noise).

The AEKG encapsulates all known relationships about animal emotions, behaviors, physiological traits, and environmental influences. Nodes in the AEKG represent emotions as primary (e.g., Fear, Joy), secondary (e.g., Anxiety, Trust), tertiary (e.g., Herd Bonding), behaviors such as species-specific actions (e.g., tail wagging, vocalizations, grooming), physiological traits such as features like cortisol levels, oxytocin spikes, heart rate variability, environmental factors such as contextual elements like predator proximity, herd size, or temperature. Edges in the AEKG represent relationships such as causal relationships, for example, predator proximity, fear, flight behavior, correlational links such as high oxytocin, trust, temporal transitions such as fear, anxiety, panic. Weight Assignment to each relationship is derived from domain knowledge, experimental data, or neural models. For example: Loud noise, Fear (weight: 90), Fear, Anxiety (weight: 75).

Further for training the GNN-transformer model, a labelled set of scenario specific subgraphs are extracted comprising a second set of nodes and a second set of edges representing a second set of relationships, from the AEKG. The labelled set of scenario specific subgraphs are extracted based on a set of scenario types comprising a set of species-specific emotional scenarios, a set of context-specific scenarios and a set of rare scenarios using a set of pre-defined rules. From the AEKG, thousands or millions of scenario-specific subgraphs are generated to represent diverse real-world situations. The set of scenario-specific subgraphs are extracted from the AEKG for specific emotional states or events. Scenario types such as species-specific emotional scenarios (e.g., fear in cows vs. dogs), context-specific scenarios (e.g., fear due to predator proximity vs. loud noise), rare or edge cases (e.g., herd bonding in isolation) are considered for generating the scenario specific subgraphs. These scenario specific subgraphs are generated using pre-defined domain rules and generative AI models. Hence the extraction and augmentation of subgraphs are automated. For example, during augmentation of subgraphs generating variations by altering edge weights or adding/removing nodes is performed. Relevant nodes and edges are selected for a given scenario. Only features pertinent to the specific context are included (e.g., loud vocalization, predator proximity). Graph augmentation techniques are used to introduce variability in subgraphs (e.g., simulate partial or noisy data).

The pre-defined domain rules are guidelines or logical principles that define how emotional states, and their corresponding behaviors are triggered in animals. These rules are essential for controlling how the subgraphs are generated or modified based on specific situations or emotional experiences. The various examples of pre-defined domain rules considered are provided as below,
Species-specific rules: Certain emotions manifest differently across species. For example, fear in a cow may be represented by flight behavior (running away), whereas in a dog, it might involve cowering or growling.
Context-specific rules: The same emotional state may differ based on the context. Fear triggered by the proximity of a predator could be more intense than fear caused by a loud noise.
Intensity or threshold rules: Emotional responses might vary in intensity. For example, mild fear (e.g., nervousness in social situations) vs. extreme fear (e.g., running from a predator).
Temporal rules: Some emotional states might evolve over time or shift in intensity, such as mild anxiety becoming panic in certain scenarios.
Social context rules: For social animals, emotional responses might depend on group dynamics. A herd's response to bonding might differ in isolation versus in the presence of familiar members.

Considering these domain rules, generative AI (GenAI) model is used for creating scenario-specific subgraphs. The steps for generating the scenario-specific subgraphs are explained henceforth.
a. Data Preparation and Input: The input specific scenarios that need to be modeled are defined. For example: Fear in cows due to the proximity of a predator, fear in dogs due to a loud noise, herd bonding in isolation. Each scenario involves a combination of species, emotional state, stimulus, and context. For example, a "fear" scenario link the emotion "fear" node to context-specific nodes (such as predator proximity, loud noise, etc.) with specific edge weights reflecting the intensity of the emotional response.
b. Pre-defined domain rule application: The various pre-defined domain rules are applied in various scenarios as considered below,
   Species-specific adjustments: Apply domain rules that define how a specific species responds emotionally to certain situations. For example, the emotional response to a predator might have a different graph structure for dogs (which may exhibit fear by barking or running away) versus cows (which might freeze or run in a herd).
   Context-specific adjustments: Subgraph structures are modified depending on whether the stimulus is a predator or loud noise. This alters the connections (edges) and weights (intensity) of the emotional response.
   Temporal adjustments: If the scenario involves prolonged exposure (like a loud noise over time), the subgraph might evolve, showing changes in the emotional state from mild anxiety to panic.
   Intensity scaling: Edge weights are adjusted to reflect emotional intensity. The response to a close predator might have a higher weight than to distant sounds, indicating a stronger emotional response.
c. Subgraph construction and augmentation: New nodes are generated representing specific emotional states, species, or context. New edges are defined based on the relationships dictated by pre-defined domain rules. For example, a predator's proximity might connect to a fear node with a certain edge weight representing the fear response. Generative AI models can create edge weight variations based on context, such as fear being stronger in cows due to predator proximity than in dogs when hearing loud noises. Automatically add new nodes or remove irrelevant ones based on changes in the scenario. For example, during herd bonding in isolation, new social bonding nodes might appear, and emotional intensity nodes like loneliness might be added.
d. Subgraph Variations: After applying the pre-defined domain rules, GenAI can automatically generate a scenario specific subgraph that reflects the unique emotional experience in the given scenario. The generated subgraphs can represent fear in dogs due to a loud noise with a set of linked nodes (fear, loud noise, dog behavior) and edges with appropriate weights. It can also represent herd bonding in isolation for cows, showing nodes for social isolation, group bonding, and the emotional states triggered. The edges are altered by modifying edge weights and relationships based on the emotional intensity in the scenario. For instance, a high threat predator could change the edge from predator proximity to fear to a higher weight, indicating a stronger response.
e. Augmenting scenario specific subgraphs: By modifying the edge weights or adding/removing certain nodes, variations of the same emotional state are generated across different contexts. For instance, generating a fear response under various conditions like being alone versus being with others might lead to changes in the graph, such as a stronger connection between social bonding and fear for certain species. These variations can also help generate edge cases (e.g., the response of a herd to a predator in isolation), ensuring that rare or outlier scenarios are covered in the subgraphs.
f. Automation of scenario specific subgraph extraction: Once the rules and generative models are set up, scenario-specific subgraphs are automatically extracted based on different emotional states and situations. For example, the subgraphs are generated for fear in cow when a predator is present in the environment, and joy in dogs when playing with their owners.

Further the GNN-transformer model is trained using the labelled set of scenario specific subgraphs. The GNN-transformer model includes a set of GNN layers, a set of transformer layers and a fusion layer. The set of GNN Layers learn the relationships between the set of scenario specific subgraph nodes and propagate information. The set of transformer layers capture temporal dependencies and learns a set of temporal dependencies from the labelled set of scenario specific subgraphs, i.e., long-range interactions in emotional transitions. The fusion layer combines GNN and Transformer outputs for final predictions. The fusion layer combines the learnt second set of relationships and the learnt set of temporal dependencies for predicting the primary emotion, the secondary emotion and the tertiary emotion in real time.

The one or more emotions are determined using a first level detection, a second level detection and a third level detection. FIG. 5 illustrates a block diagram for primary emotion detection unit according to some embodiments of the present disclosure. From the block diagram the primary emotion is determined in the first level of detection, from a first subset of real time graphs from the set of real time graphs. These graphs are generated from a first subset of features extracted from the audio data only. Here the other multimodal input data is not considered for generating the primary emotion. The trained GNN-transformer model outputs a likelihood percentage or a confidence score for the primary emotion. FIG. 6 illustrates a block diagram for secondary emotion detection unit according to some embodiments of the present disclosure. From the block diagram it is seen that, the secondary emotion is determined in two different ways. Either from a second subset of real time graphs from the set of real time graphs generated from a second subset of features extracted from the audio data and the video data if a confidence score or likelihood percentage from the trained GNN-transformer model is more than a pre-defined threshold. If it is more than the pre-defined threshold, then the secondary emotion is determined from the audio and video data. If the confidence score is less than the pre-defined threshold then the secondary emotion is determined from a third subset of real time graphs from the set of real time graphs if it satisfies any one of (i) the confidence score from the trained GNN-transformer model is less than a pre-defined threshold, or (ii) the secondary emotion is not detected using the second subset of real time graphs. These third subset of real time graphs are generated from a third subset of features extracted from the audio data, the video data, the physiological data, and the environmental data. However, if the secondary emotion is not determined, then only primary emotion is determined. So also tertiary emotion is not determined. The pre-defined threshold is a point at which an emotion becomes perceptible enough to be recognized as distinct from a neutral expression; this threshold can vary depending on the emotion itself and individual differences in perception, and can be pre-configured based on the veterinary subject matter experts (SMEs) and/or auto-learnt by the system over a long period of time. For example, in the context of secondary emotion detection, a threshold for the emotion "scared" may be set at a 50% likelihood. If, upon analysis using audio and video data, the likelihood of the emotion "scared" is determined to be 30%, this falls below the pre-defined threshold. In this case, the method relies on additional data sources such as physiological and environmental data. If the likelihood of "scared" reaches or exceeds the 50% threshold (e.g., 70% likelihood) incorporating all data sources (audio, video, physiological, and environmental) the method will consider it a definitive secondary emotion. If the likelihood of "scared" remains below the pre-defined threshold incorporating all data sources, the method will only acknowledge the primary emotion and disregard the secondary emotion as a significant contributor to the emotional state being exhibited. The one or more emotions includes the primary emotion only if any one of the following satisfies (i) the confidence score of the secondary emotion from the trained GNN-transformer model using the second subset of real time graphs is less than the pre-defined threshold during the second level of detection, or (ii) the secondary emotion is not determined. In this case, only primary emotion is determined, and by the second level of detection the step for determining the emotions is stopped. Also, the one or emotions comprises the primary emotion and the secondary emotion if any one of the following satisfies (i) the confidence score of the tertiary emotion from the trained GNN-transformer model using the third subset of real time graphs is less than the pre-defined threshold during the third level of detection, or (ii) the tertiary emotion is not determined. In this case, only primary and secondary emotion is determined. Also, at any level of detection, if the corresponding multimodal input data is not available, the emotion detection stops at that particular level of detection. The emotions determined till that level of detection will be included in the one or more emotions.

FIG.7 illustrates a block diagram for tertiary emotion detection unit according to some embodiments of the present disclosure. From the block diagram the tertiary emotion is determined in the third level of detection from the third subset of real time graphs generated from the third subset of features. If the tertiary emotion is not detected, then with the emotions generated are only the primary emotion and the secondary emotion.

Each graph Gₜ of the set of real time graphs is passed through the GNN to generate a graph-level embedding h^{(t)} graph at time instant t. The GNN propagates information across the graph by aggregating features from neighboring nodes. Using operations like message passing, each node updates its feature vector based on the information from connected nodes and edges. Once all node embeddings are updated, a pooling operation (e.g., mean or max pooling) combines these node embeddings into a single vector representing the entire graph at timestamp t. For each graph Gₜ the GNN-transformer model uses Graph Neural Networks (GNNs) to aggregate and propagate information between nodes and edges. Node embeddings are updated based on their relationships (edges) with neighboring nodes, capturing the structure and feature interactions of Gt.

Furthermore, at step 206 of the method 200, one or more hardware processors 102 are configured to generate an emotion intensity corresponding to the one or more emotions using an emotion intensity function based on the multimodal input data. The emotion intensity function is mathematically represented as, $Emotion intensity function = f \left(\begin{matrix}AD ∗ W 1 , PD ∗ W 2 , BD ∗ W 3 , ED ∗ \\ W 4\end{matrix}\right) ∗ 100$ where, AD is an average of normalized values of the audio data, PD is an average of normalized values of the physiological data, BD is an average of normalized values of behavior data extracted from the video data, ED is an average of normalized values of the environmental data, W1, W2, W3, W4 is at least one of a pre-defined (i) high weightage, or (ii) medium weightage, or (iii) low weightage. For example, in scenarios where the presence of a predator is observed or the delay in the feed is prolonged, audio data has a significant role in the overall analysis, thereby being assigned a high weightage. This is due to the critical importance of auditory cues in alerting individuals to potential threats or changes in the environment.
For example, for this case,
W1 = 0.5, W2 = 0.1, W3 = 0.1, W4 = 0.3
In calmer scenarios where the feed delay is relatively less (e.g., less than 10 minutes), the influence of vocalizations is diminished, resulting in a reduced weightage for audio features. In such cases, physiological and/or behavioral data are afforded higher weightage, as these factors are more indicative of the subject's state in response to less imminent threats or environmental stressors.
For example, for this case,
W1 = 0.1, W2 = 0.3, W3 = 0.3, W4 = 0.3.

Further at step 208 of the method 200, one or more hardware processors 102 are configured to predict a future emotion of the animal for a next time instant using a recurrent neural network by performing a temporal analysis based on the one or more emotions, determined at a current time instant and one or more previous time instants. The sequence of graph embeddings h⁽¹⁾graph, h⁽²⁾graph,.........,h^{(T)}graph at each time instant is fed into the recurrent neural network like LSTM (Long Short-Term Memory) or GRU (Gated Recurrent Unit). This model processes the sequential embeddings to capture temporal dependencies and transitions between emotional states. The hidden state at each time instant h^{t} represents the combined effect of current and past graph embeddings, enabling the model to understand how emotions evolve over time. Sequential graph embeddings are vector representations generated from a series of graphs Gₜ over time. Each graph embedding h^{(t)} graph encodes the structural and feature information of the graph Gₜ at the current time instant. Each graph embedding capture interactions between nodes and edges. Sequential graph embeddings are created using GNN. Node embeddings are first generated by aggregating information from neighbors using message passing. Graph pooling methods (e.g., mean or max pooling) aggregate all node embeddings to create a single vector representing the real time graph. The RNN processes these sequential graph embeddings to learn dependencies and transitions, allowing the GNN-transformer model to predict current emotions and future emotions.

At step 210 of the method 200, one or more hardware processors 102 are configured to generate a set of real-time recommendations by querying a recommendation database. This is based on the one or more emotions determined in real time, the predicted future emotion, the emotion intensity, the environment data and time spent in the emotion determined in the current time instant from an animal emotion diary, using a large language model (LLM). For example, if the detected emotion is "Fear" and the predicted emotion is "Anxiety," the recommendation is reducing external stimuli or providing comforting resources. Reinforcement learning algorithms refine these recommendations over time based on observed outcomes. Generation of recommendations is done using current detected emotions, predicted emotions, emotion intensity, time spent in each emotion received from animal emotion diary, environmental factor. These are fed to LLM for generating the recommendations. Animal emotion diary consists of an emotion exhibited by the animal and time for which that emotion is exhibited. The reinforcement learning technique used here is deep reinforcement learning with graph-based models such as Deep Q-Learning (DQN). Deep reinforcement learning with graph-based models, such as combining Graph Neural Networks (GNNs) with Deep Q-Learning (DQN), is an effective method for iteratively optimizing and updating the AEKG and recommendation databases. This approach leverages GNNs to encode the graph structure (nodes, edges, and their features) into graph embeddings, which are then fed into the DQN to approximate the Q-function. The Q-function predicts the expected cumulative reward for each possible action, such as adding a node, modifying an edge, or updating edge weights. The actions are chosen based on the current state (emotion) of the graph to maximize long-term rewards, such as improving recommendation accuracy or emotion detection precision. For example, if a new edge between "Elevated Cortisol" and "Defensive Behavior" improves prediction accuracy for animal emotions, the DQN assigns a higher Q-value to this action, reinforcing its selection in future iterations. Over multiple episodes, the agent learns to optimize the graph dynamically by balancing exploration (testing new graph modifications) and exploitation (choosing proven updates). This method is particularly effective for large and complex graphs because the GNN efficiently captures relationships and structural properties, while the DQN handles the optimization, making it scalable for continuous graph refinement tasks. However, other relevant RL techniques such as Proximal Policy Optimization (PPO), Q-Learning, policy gradient methods, actor-critic methods, Monte Carlo Tree Search with RL, and multi-agent RL can also be used for recommendation process. This depends upon the complexity and depth of graphs. For small graphs or simple updates Q-learning or policy gradient updates can be used. For complex, large-scale graphs DQN, PPO or actor-critic methods can be used. For dynamic and evolving graphs graph reinforcement learning can be used.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) comprising:
generating, via one or more hardware processors, a set of real time graphs represented as an animal emotion knowledge graph (AEKG) from a multi-modal input data of an animal, wherein the multi-modal input data captured from a set of sensors at each time instant in real time comprises an audio data, a video data, a physiological data, and an environmental data (202);
determining, via the one or more hardware processors, one or more emotions comprising at least one of (i) a primary emotion, or (ii) the primary emotion and a secondary emotion, or (iii) the primary emotion, the secondary emotion and a tertiary emotion, from the set of real time graphs using a trained graph neural network (GNN)- transformer model (204);
generating, via the one or more hardware processors, an emotion intensity corresponding to the one or more emotions using an emotion intensity function based on the multi-modal input data (206);
predicting, via the one or more hardware processors, a future emotion of the animal for a next time instant using a recurrent neural network by performing a temporal analysis based on the one or more emotions determined at a current time instant and one or more previous time instants (208); and
generating, via a large language model by the one or more hardware processors, a set of real-time recommendations by querying a recommendation database based on the one or more emotions determined in real time, the predicted future emotion, the emotion intensity, the environment data and time spent in the emotion determined in the current time instant from an animal emotion diary (210).

2. The processor implemented method as claimed in claim 1, wherein the set of real time graphs are generated based on an animal wheel of emotion (AWOE) adapted from human neurobiological data, animal neurobiological data, a human wheel of emotion, and experimental data, and wherein the set of real time graphs comprises a first set of nodes representing a set of features extracted from the multi-modal input data, a first set of edges representing a first set of relationships between the first set of nodes, and a weight corresponding to each relationship indicating a transition probability of the relationship.

3. The processor implemented method as claimed in claim 1, wherein the trained GNN-transformer model is generated by,
building, via the one or more hardware processors, the AEKG comprising a plurality of nodes and a plurality of edges representing a plurality of relationships between the plurality of nodes, based on the human neurobiological data, the animal neurobiological data, the human wheel of emotion, and the experimental data;
extracting, via the one or more hardware processors, a labelled set of scenario specific subgraphs comprising a second set of nodes and a second set of edges representing a second set of relationships, from the AEKG based on a set of scenario types comprising a set of species-specific emotional scenarios, a set of context-specific scenarios and a set of rare scenarios using a set of pre-defined rules; and
training, via the one or more hardware processors, a GNN-transformer model to obtain the trained GNN-transformer model using the labelled set of scenario specific subgraphs, wherein a set of GNN layers in the GNN-transformer model learns the second set of relationships, a set of transformer layers in the GNN-transformer model learns a set of temporal dependencies from the labelled set of scenario specific subgraphs and a fusion layer in the GNN-transformer model combines the learnt second set of relationships and the learnt set of temporal dependencies for predicting the primary emotion, the secondary emotion and the tertiary emotion in real time.

4. The processor implemented method as claimed in claim 1, wherein the one or more emotions are determined using a first level detection, a second level detection and a third level detection,
wherein the primary emotion is determined in the first level of detection, from a first subset of real time graphs of the set of real time graphs generated from a first subset of features extracted from the audio data,
wherein the secondary emotion is determined in the second level of detection, at least (i) from a second subset of real time graphs of the set of real time graphs generated from a second subset of features extracted from the audio data and the video data if a confidence score from the trained GNN-transformer model is more than a pre-defined threshold, or (ii) from a third subset of real time graphs of the set of real time graphs generated from a third subset of features extracted from the audio data, the video data, the physiological data, and the environmental data if at least one satisfies (a) the confidence score from the trained GNN-transformer model is less than a pre-defined threshold, or (b) the secondary emotion is not detected using the second subset of real time graphs,
wherein the tertiary emotion is determined in the third level of detection, from the third subset of real time graphs generated from the third subset of features,
wherein the one or emotions comprises the primary emotion if at least one satisfies (i) the confidence score of the secondary emotion from the trained GNN-transformer model using the second subset of real time graphs is less than the pre-defined threshold during the second level of detection, or (ii) the secondary emotion is not determined, and
wherein the one or emotions comprises the primary emotion and the secondary emotion if at least one satisfies (i) the confidence score of the tertiary emotion from the trained GNN-transformer model using the third subset of real time graphs is less than the pre-defined threshold during the third level of detection, or (ii) the tertiary emotion is not determined.

5. The processor implemented method as claimed in claim 1, wherein the emotion intensity function is mathematically represented as, $Emotion intensity function = f \left(\begin{matrix}AD ∗ W 1 , PD ∗ W 2 , BD ∗ \\ W 3 , ED ∗ W 4\end{matrix}\right) ∗ 100$ where, *AD* is an average of normalized values of the audio characteristic data, *PD* is an average of normalized values of the physiological data, *BD* is an average of normalized values of behavior data extracted from the video data, *ED* is an average of normalized values of the environmental data, *W1, W2, W3, W4* is at least one of a pre-defined (i) high weightage, or (ii) medium weightage, or (iii) low weightage.

6. A system (100), comprising:
a memory (104) storing instructions;
one or more communication interfaces (106); and
one or more hardware processors (102) coupled to the memory (104) via the one or more communication interfaces (106), wherein the one or more hardware processors (102) are configured by the instructions to:
generate a set of real time graphs represented as an animal emotion knowledge graph (AEKG) from a multi-modal input data of an animal, wherein the multi-modal input data captured from a set of sensors at each time instant in real time comprises an audio data, a video data, a physiological data, and an environmental data;
determine one or more emotions comprising at least one of (i) a primary emotion, or (ii) the primary emotion and a secondary emotion, or (iii) the primary emotion, the secondary emotion and a tertiary emotion, from the set of real time graphs using a trained graph neural network (GNN)- transformer model;
generate an emotion intensity corresponding to the one or more emotions using an emotion intensity function based on the multi-modal input data;
predict a future emotion of the animal for a next time instant using a recurrent neural network by performing a temporal analysis based on the one or more emotions, determined at a current time instant and one or more previous time instants; and
generate via a large language model a set of real-time recommendations by querying a recommendation database based on the one or more emotions determined in real time, the predicted future emotion, the emotion intensity, the environment data and time spent in the emotion determined in the current time instant from an animal emotion diary.

7. The system as claimed in claim 6, wherein the set of real time graphs are generated based on an animal wheel of emotion (AWOE) adapted from human neurobiological data, animal neurobiological data, a human wheel of emotion, and experimental data, and wherein the set of real time graphs comprises a first set of nodes representing a set of features extracted from the multi-modal input data, a first set of edges representing a first set of relationships between the first set of nodes, and a weight corresponding to each relationship indicating a transition probability of the relationship.

8. The system as claimed in claim 6, wherein the trained GNN-transformer model is generated by,
building the AEKG comprising a plurality of nodes and a plurality of edges representing a plurality of relationships between the plurality of nodes, based on the human neurobiological data, the animal neurobiological data, the human wheel of emotion, and the experimental data;
extracting a labelled set of scenario specific subgraphs comprising a second set of nodes and a second set of edges representing a second set of relationships, from the AEKG based on a set of scenario types comprising a set of species-specific emotional scenarios, a set of context-specific scenarios and a set of rare scenarios using a set of pre-defined rules; and
training a GNN-transformer model to obtain the trained GNN-transformer model using the labelled set of scenario specific subgraphs, wherein a set of GNN layers in the GNN-transformer model learns the second set of relationships, a set of transformer layers in the GNN-transformer model learns a set of temporal dependencies from the labelled set of scenario specific subgraphs and a fusion layer in the GNN-transformer model combines the learnt second set of relationships and the learnt set of temporal dependencies for predicting the primary emotion, the secondary emotion and the tertiary emotion in real time.

9. The system as claimed in claim 6, wherein the one or more emotions are determined using a first level detection, a second level detection and a third level detection,
wherein the primary emotion is determined in the first level of detection, from a first subset of real time graphs of the set of real time graphs generated from a first subset of features extracted from the audio data,
wherein the secondary emotion is determined in the second level of detection, at least (i) from a second subset of real time graphs of the set of real time graphs generated from a second subset of features extracted from the audio data and the video data if a confidence score from the trained GNN-transformer model is more than a pre-defined threshold, or (ii) from a third subset of real time graphs of the set of real time graphs generated from a third subset of features extracted from the audio data, the video data, the physiological data, and the environmental data if at least one satisfies (a) the confidence score from the trained GNN-transformer model is less than a pre-defined threshold, or (b) the secondary emotion is not detected using the second subset of real time graphs,
wherein the tertiary emotion is determined in the third level of detection, from the third subset of real time graphs generated from the third subset of features,
wherein the one or emotions comprises the primary emotion if at least one satisfies (i) the confidence score of the secondary emotion from the trained GNN-transformer model using the second subset of real time graphs is less than the pre-defined threshold during the second level of detection, or (ii) the secondary emotion is not determined, and
wherein the one or emotions comprises the primary emotion and the secondary emotion if at least one satisfies (i) the confidence score of the tertiary emotion from the trained GNN-transformer model using the third subset of real time graphs is less than the pre-defined threshold during the third level of detection, or (ii) the tertiary emotion is not determined.

10. The system as claimed in claim 6, wherein the emotion intensity function is mathematically represented as, $Emotion intensity function = f \left(\begin{matrix}AD ∗ W 1 , PD ∗ W 2 , BD ∗ \\ W 3 , ED ∗ W 4\end{matrix}\right) ∗ 100$ where, *AD* is an average of normalized values of the audio characteristic data, *PD* is an average of normalized values of the physiological data, *BD* is an average of normalized values of behavior data extracted from the video data, *ED* is an average of normalized values of the environmental data, *W1, W2, W3, W4* is at least one of a pre-defined (i) high weightage, or (ii) medium weightage, or (iii) low weightage.

11. One or more non-transitory machine-readable information storage mediums comprising one or more instructions which when executed by one or more hardware processors cause:
generating a set of real time graphs represented as an animal emotion knowledge graph (AEKG) from a multi-modal input data of an animal, wherein the multi-modal input data captured from a set of sensors at each time instant in real time comprises an audio data, a video data, a physiological data, and an environmental data;
determining one or more emotions comprising at least one of (i) a primary emotion, or (ii) the primary emotion and a secondary emotion, or (iii) the primary emotion, the secondary emotion and a tertiary emotion, from the set of real time graphs using a trained graph neural network (GNN)- transformer model;
generating an emotion intensity corresponding to the one or more emotions using an emotion intensity function based on the multi-modal input data;
predicting a future emotion of the animal for a next time instant using a recurrent neural network by performing a temporal analysis based on the one or more emotions determined at a current time instant and one or more previous time instants; and
generating, via a large language model, a set of real-time recommendations by querying a recommendation database based on the one or more emotions determined in real time, the predicted future emotion, the emotion intensity, the environment data and time spent in the emotion determined in the current time instant from an animal emotion diary.

12. The one or more non-transitory machine-readable information storage mediums as claimed in claim 11, wherein the set of real time graphs are generated based on an animal wheel of emotion (AWOE) adapted from human neurobiological data, animal neurobiological data, a human wheel of emotion, and experimental data, and wherein the set of real time graphs comprises a first set of nodes representing a set of features extracted from the multi-modal input data, a first set of edges representing a first set of relationships between the first set of nodes, and a weight corresponding to each relationship indicating a transition probability of the relationship.

13. The one or more non-transitory machine-readable information storage mediums as claimed in claim 11, wherein the trained GNN-transformer model is generated by,
building the AEKG comprising a plurality of nodes and a plurality of edges representing a plurality of relationships between the plurality of nodes, based on the human neurobiological data, the animal neurobiological data, the human wheel of emotion, and the experimental data;
extracting a labelled set of scenario specific subgraphs comprising a second set of nodes and a second set of edges representing a second set of relationships, from the AEKG based on a set of scenario types comprising a set of species-specific emotional scenarios, a set of context-specific scenarios and a set of rare scenarios using a set of pre-defined rules; and
training a GNN-transformer model to obtain the trained GNN-transformer model using the labelled set of scenario specific subgraphs, wherein a set of GNN layers in the GNN-transformer model learns the second set of relationships, a set of transformer layers in the GNN-transformer model learns a set of temporal dependencies from the labelled set of scenario specific subgraphs and a fusion layer in the GNN-transformer model combines the learnt second set of relationships and the learnt set of temporal dependencies for predicting the primary emotion, the secondary emotion and the tertiary emotion in real time.

14. The one or more non-transitory machine-readable information storage mediums as claimed in claim 11, wherein the one or more emotions are determined using a first level detection, a second level detection and a third level detection,
wherein the primary emotion is determined in the first level of detection, from a first subset of real time graphs of the set of real time graphs generated from a first subset of features extracted from the audio data,
wherein the secondary emotion is determined in the second level of detection, at least (i) from a second subset of real time graphs of the set of real time graphs generated from a second subset of features extracted from the audio data and the video data if a confidence score from the trained GNN-transformer model is more than a pre-defined threshold, or (ii) from a third subset of real time graphs of the set of real time graphs generated from a third subset of features extracted from the audio data, the video data, the physiological data, and the environmental data if at least one satisfies (a) the confidence score from the trained GNN-transformer model is less than a pre-defined threshold, or (b) the secondary emotion is not detected using the second subset of real time graphs,
wherein the tertiary emotion is determined in the third level of detection, from the third subset of real time graphs generated from the third subset of features,
wherein the one or emotions comprises the primary emotion if at least one satisfies (i) the confidence score of the secondary emotion from the trained GNN-transformer model using the second subset of real time graphs is less than the pre-defined threshold during the second level of detection, or (ii) the secondary emotion is not determined, and
wherein the one or emotions comprises the primary emotion and the secondary emotion if at least one satisfies (i) the confidence score of the tertiary emotion from the trained GNN-transformer model using the third subset of real time graphs is less than the pre-defined threshold during the third level of detection, or (ii) the tertiary emotion is not determined.

15. The one or more non-transitory machine-readable information storage mediums as claimed in claim 11, wherein the emotion intensity function is mathematically represented as, $Emotion intensity function = f \left(\begin{matrix}AD ∗ W 1 , PD ∗ W 2 , BD ∗ \\ W 3 , ED ∗ W 4\end{matrix}\right) ∗ 100$ where, *AD* is an average of normalized values of the audio characteristic data, *PD* is an average of normalized values of the physiological data, *BD* is an average of normalized values of behavior data extracted from the video data, *ED* is an average of normalized values of the environmental data, *W1, W2, W3, W4* is at least one of a pre-defined (i) high weightage, or (ii) medium weightage, or (iii) low weightage.
